# FASCICULE DE BREVET EUROPEEN

(11) **EP 4 396 600 B1**
(45) Date de publication et mention de la délivrance du brevet: **04.11.2026**
(21) Numéro de dépôt: 22772946.4
(22) Date de dépôt: 02.09.2022
(51) Int. Cl.: G01S 7/02, G01S 7/03, G01S 13/931

(54) **SYSTÈME RADAR POUR VÉHICULE À MOTEUR**
RADARSYSTEM FÜR EIN KRAFTFAHRZEUG
RADAR SYSTEM FOR A MOTOR VEHICLE

(30) Priorité: 03.09.2021 FR 2109249
(43) Date de publication de la demande: 10.07.2024
(73) Titulaire: OPmobility SE, 69007 Lyon (FR)
(72) Inventeur: BANCELIN, Mathieu, 01150 SAINTE-JULIE (FR); GILOTTE, Philippe, 01150 SAINTE-JULIE (FR); ROCHEBLAVE, Laurent, 01150 SAINTE-JULIE (FR); STABLO, Frédéric, 01150 SAINTE-JULIE (FR)
(74) Mandataire: LLR
(86) Numéro de dépôt international: PCT/EP2022/074498
(87) Numéro de publication internationale: WO 2023/031421

(56) Documents cités:
- EP-A1- 3 734 749
- WO-A1-2020/043633
- US-A1- 2016 240 907
- US-A1- 2018 210 079

## Description

La présente invention concerne le domaine des véhicules à moteur, par exemple des véhicules automobiles, équipés d'un système radar pour émettre et/ou recevoir une onde électromagnétique dans une direction souhaitée, notamment pour détecter un obstacle.

On connaît des véhicules automobiles équipés de dispositifs de type radar, généralement positionnés sur les pare-chocs avant et arrière du véhicule. Ces dispositifs radars sont utilisés pour l'assistance au stationnement mais également pour l'assistance à la conduite, par exemple pour les applications de régulation de la vitesse des véhicules en fonction du trafic mieux connues sous le sigle anglo-saxon ACC (« Adaptative Cruise Control ») dans lesquelles le dispositif radar détecte la vitesse et la distance d'un véhicule précédant le véhicule porteur du dispositif radar. Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

De façon générale, un domaine important des applications de radars de l'industrie automobile est celui de la carrosserie des véhicules dans laquelle on intègre de plus en plus de modules radars pour permettre la détection périphérique totale autour du véhicule, par exemple pour des équipements tels que des systèmes d'assistance aux manœuvres de parking, des systèmes d'assistance de recul ou des installations de protection des piétons ou autres systèmes de ce type. Cependant ces différents radars sont de types différents suivant leur champ de détection (longue ou courte distance, détection frontale ou latérale, ...) et leur fonction (parking, conduite autonome ...) mais aussi suivant leur fabricant, ce qui ne leur permet pas de pouvoir consolider de façon optimale les données fournies par chacun indépendamment aux divers équipements du véhicule qui peuvent les exploiter (freinage, direction, phares, alarmes sonores ou visuelles ...).

Ainsi, afin de mieux caractériser l'environnement périphérique du véhicule, les constructeurs automobiles ont besoin de dispositifs permettant d'améliorer, d'une part, la taille du volume à surveiller autour du véhicule, et d'autre part, la résolution du traitement des informations issues de ces dispositifs. Ceci, afin que le véhicule interagisse au mieux, c'est-à-dire avec plus de précision et plus rapidement, avec son environnement, pour notamment, éviter des accidents, faciliter les manœuvres et rouler de façon autonome.

Afin d'augmenter la détection périphérique en volume (3D) autour du véhicule, les constructeurs automobiles sont amenés à multiplier le nombre de radars distribués sur une surface donnée.

Cependant, l'augmentation du nombre de radars utilisés, engendre une augmentation du coût.

De plus, l'augmentation du nombre de radars nécessite d'alimenter en continu de nombreuses pistes radiofréquences, ce qui consomme beaucoup d'énergie, ce qui est très préjudiciable notamment pour des véhicules autonomes et/ou électriques.

Par ailleurs, même si les radars peuvent être un peu miniaturisés, l'augmentation du nombre de radars distribués sur une surface donnée peut être difficile à réaliser du fait de la surface disponible limitée (la taille des pièces de carrosserie ne peut être augmentée) ainsi que la présence d'autres équipements, d'autant plus qu'il peut être nécessaire de conserver une distance minimale entre chaque radar pour éviter qu'ils n'interfèrent entre eux. Le document WO2020/043633A1, du demandeur divulgue un radar utilisant une ou plusieurs antennes à cavités réfléchissantes et comportant des métasurfaces et des guides d'onde.

Pour obtenir des informations supplémentaires relatives à la position et à la vitesse d'un obstacle données par les radars, on recherche des dispositifs ayant notamment une résolution spatiale accrue permettant par exemple de reconnaitre les objets (environnement ou obstacles) entourant le véhicule, de suivre leur trajectoire, d'en constituer une imagerie la plus complète possible.

Ainsi, les véhicules s'équipent de plus en plus de dispositifs complémentaires aux radars, tels que des LIDAR et des caméras.

La résolution spatiale exprime la capacité d'un dispositif d'observation à distinguer les détails. Elle peut être caractérisée notamment par la distance minimale qui doit séparer deux points contigus pour qu'ils soient correctement discernés.

Dans le cas d'un radar, cette distance de résolution est fonction du rapport entre la longueur d'onde de l'onde utilisée pour l'observation, et la taille de l'ouverture du dispositif d'observation. Ainsi, pour améliorer la résolution spatiale, c'est-à-dire diminuer la distance de résolution, il est nécessaire de diminuer la longueur d'onde (augmenter la fréquence de l'onde) et/ou nécessaire d'augmenter l'ouverture du dispositif d'observation. En effet, la résolution spatiale R est caractérisée par l'équation suivante : $R = \frac{c ∗ L}{f ∗ O}$ avec *c* la vitesse de la lumière, *L* la distance entre le dispositif d'observation et la cible, *f* la fréquence du radar et *O* l'ouverture du dispositif d'observation.

C'est la raison pour laquelle on cherche aujourd'hui à utiliser des radars fonctionnant à plus haute fréquence, par exemple à 77GhZ au lieu de 24GHz.

Et au contraire, la miniaturisation des radars actuels conduit à réduire leur ouverture donc leur résolution.

Par ailleurs, un problème rencontré pour un radar porté par une pièce de carrosserie concerne le positionnement du radar. En effet, il est important de pouvoir assurer l'intégrité d'un radar, afin qu'il remplisse sa fonction correctement, même en cas de déformation de la pièce de carrosserie le portant (choc, dilatation thermique, ...). Il est donc nécessaire d'assurer un bon positionnement du radar (direction d'émission/réception maintenue) pendant toute la durée d'utilisation de la fonction radar.

Il convient donc de fournir une solution permettant de fournir la position et la vitesse des objets situés autour du véhicule et d'obtenir une portée et une résolution spatiale plus adaptées, tout en limitant le coût et la consommation énergétique du dispositif de détection. Cela permet d'améliorer la détection d'objets ou de personnes autour du véhicule et de faciliter l'implantation de tels systèmes dans des véhicules autonomes, notamment des véhicules électriques dont la consommation doit être limitée au maximum.

À cet effet, l'invention a pour objet un système radar pour véhicule à moteur comprenant :
- une unité électronique configurée pour émettre et recevoir une onde électromagnétique dans une plage de fréquence prédéterminée,
- une première antenne directive disposée sur une première pièce de carrosserie du véhicule et comprenant une première cavité réfléchissante aux ondes électromagnétiques dans laquelle est positionnée une première métasurface, ladite première antenne étant configurée pour être reliée à l'unité électronique via un premier guide d'onde et pour émettre une onde électromagnétique émise par l'unité électronique et propagée via le premier guide d'onde dans une première direction prédéterminée et/ou pour propager une onde électromagnétique reçue depuis la première direction prédéterminée vers l'unité électronique via le premier guide d'onde,
- une deuxième antenne directive disposée sur une deuxième pièce de carrosserie comprenant une deuxième cavité réfléchissante aux ondes électromagnétiques dans laquelle est positionnée une deuxième métasurface, ladite deuxième antenne étant configurée pour être reliée à l'unité électronique via un deuxième guide d'onde et pour transmettre une onde électromagnétique émise par l'unité électronique et propagée via le deuxième guide d'onde dans une deuxième direction prédéterminée et/ou pour propager une onde électromagnétique reçue depuis la deuxième direction prédéterminée vers l'unité électronique via le deuxième guide. d'onde;
dans lequel la première antenne dite antenne émettrice est configurée pour émettre une onde électromagnétique émise par l'unité électronique et propagée via le premier guide d'onde dans la première direction prédéterminée et la deuxième antenne dite antenne réceptrice est configurée pour recevoir l'onde électromagnétique émise par l'antenne émettrice et réfléchie par un obstacle et pour propager l'onde électromagnétique reçue vers l'unité électronique via le deuxiéme guide d'onde.

Suivant d'autres caractéristiques optionnelles du système radar, prises seules ou en combinaison:
- La première antenne est configurée pour être disposée derrière une paroi en matière plastique de la première pièce de carrosserie et la deuxième antenne est configurée pour être disposée derrière une paroi en matière plastique de la deuxième pièce de carrosserie.
- Les antennes sont configurées pour être disposées en regard d'une paroi en matière plastique uniforme.
- Les antennes sont configurées pour être disposées en regard d'une paroi en matière plastique dont le rayon de courbure est supérieur à 500mm.
- La première pièce de carrosserie et la deuxième pièce de carrosserie sont des pièces de carrosserie adjacentes.
- La première pièce de carrosserie est disposée d'un premier côté du véhicule et la deuxième pièce de carrosserie est disposée d'un deuxième côté du véhicule opposé au premier côté.
- La première et/ou la deuxième pièce de carrosserie est une pièce de carrosserie montée mobile sur le véhicule.
- La plage de fréquence prédéterminée est supérieure à 60GHz, notamment entre 75 et 80GHz, notamment 77GHz. Des fréquences comprises entre 120 et 160 GHz, notamment 140GHz sont également possibles.
- L'unité électronique est configurée pour être positionné à distance d'une surface externe des pièces de carrosserie.

La présente invention concerne également un ensemble comprenant au moins une première et une deuxième pièces de carrosserie, l'ensemble comprenant un système radar tel que décrit précédemment.

La présente invention concerne également un véhicule à moteur comprenant une première pièce de carrosserie, une deuxième pièce de carrosserie et un système radar tel que décrit précédemment.

### Brève description des figures

L'invention sera mieux comprise à la lecture de la description qui va suivre donnée uniquement à titre d'exemple et faite en se référant aux dessins annexés dans lesquels :
[Fig. 1] est un schéma d'un système radar selon un mode de réalisation de la présente invention ;
[Fig. 2] est une vue en perspective de deux antennes du système radar de la figure 1 ;
[Fig. 3] est une vue de dessus de deux antennes disposées sur deux pièces de carrosserie adjacentes ;
[Fig. 4] est une vue de côté d'une antenne disposée sur une pièce de carrosserie ;
[Fig. 5] est une vue de face de deux antennes disposées sur deux pièces de carrosserie distinctes ;
[Fig. 6] est une vue en perspective d'un véhicule comprenant un dispositif radar à trois antennes réparties sur différentes pièces de carrosserie ;
[Fig. 7] est une vue de dessus d'un véhicule comprenant un dispositif radar à trois antennes réparties sur différentes pièces de carrosserie.

### Description détaillée

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

D'autre part, dans le cadre de la présente description, les orientations s'entendent par rapport à un trièdre XYZ lié au véhicule dans lequel l'axe X correspond à la direction d'avancement normale du véhicule, l'axe Y correspond à un axe transverse du véhicule et l'axe Z correspond à la direction opposée à la gravité lorsque le véhicule repose sur une surface plane. Le plan XY forme alors un plan horizontal et l'axe Z correspond à une direction verticale. Pour une direction D quelconque, son azimut est l'angle formé par sa projection dans le plan XY avec l'axe X, son élévation est l'angle formé par sa projection dans le plan XZ avec l'axe X. L'axe X correspond à la valeur 0° pour les angles d'azimut (dans le plan XY) et d'élévation (dans le plan XZ).

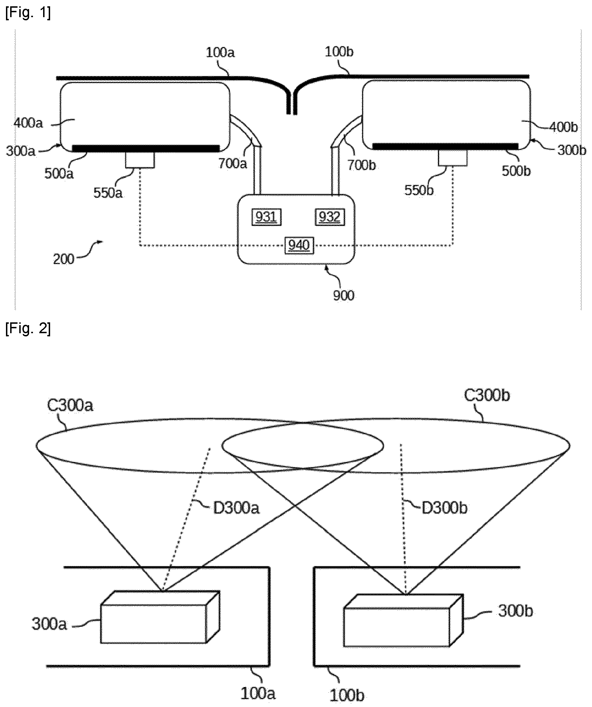

La présente invention concerne un système radar pour véhicule à moteur, notamment pour un véhicule automobile mais l'invention peut aussi s'appliquer à d'autres types de véhicules à moteur, notamment terrestres ou volants. La figure 1 représente un schéma d'un système radar 200 selon un mode de réalisation de la présente invention. Le système radar 200 comprend une unité électronique 900 comprenant un émetteur primaire 931 configuré pour émettre une onde électromagnétique dans une plage de fréquence prédéterminée et un récepteur primaire 932 configuré pour recevoir une onde électromagnétique dans la plage de fréquence prédéterminée. La plage de fréquence correspond à des valeurs supérieures à 60 GHZ, notamment entre 75 et 80 GHZ, par exemple 77 GHz qui est la valeur standardisée des dispositifs radars automobiles. Des fréquences comprises entre 120 et 160 GHz, notamment 140GHz sont également possibles. L'unité électronique 900 comprend également une électronique de contrôle 940 configurée pour piloter l'émetteur 931 et le récepteur 932.

Le système radar 200 comprend également une première antenne directive 300a disposée derrière une première pièce de carrosserie 100a et comprenant une première cavité 400a réfléchissante aux ondes électromagnétiques dans laquelle est positionnée une première métasurface 500a. La cavité réfléchissante 400a correspond à un volume configuré pour réfléchir des ondes électromagnétiques aux limites du volume. Les surfaces réfléchissantes sont par exemple réalisées par des surfaces métalliques. La cavité réfléchissante 400a comprend également des portions non réfléchissantes pour permettre l'émission et/ou la réception d'une onde électromagnétique dans une direction prédéterminée. La direction prédéterminée correspond à un cône C300a d'émission et/ou de réception autour d'un premier axe central D300a comme représenté sur la figure 2. Le premier axe central D300a s'étend par exemple dans une direction perpendiculaire au plan formé par la métasurface et/ou par une face de sortie de la première antenne directive 300a (la première antenne directive 300a a par exemple une forme parallélépipédique et la face de sortie correspond à l'une des faces du parallélépipède). La forme du cône d'émission et/ou de réception C300a dépend notamment de la forme de la métasurface 500a. Avec une métasurface 500a de forme allongée, par exemple rectangulaire, le cône d'émission et/ou de réception C300a présente par exemple une section de forme allongée également, par exemple de forme elliptique ou oblongue, dont le grand axe correspond à l'axe longitudinal de la métasurface 500a. Une électronique de contrôle 550a est par exemple associée à la métasurface 500a et connectée à l'unité électronique 900. Cette électronique de contrôle 550a permet par exemple d'intégrer le registre à décalage nécessaire au pilotage de la surface pilotée de la métasurface 500a, ou selon un autre exemple, de spécialiser l'antenne directive 300a

La première antenne 300a est reliée à l'unité électronique 900 via un premier guide d'onde 700a. Le premier guide d'onde 700a permet de propager une onde électromagnétique émise par l'émetteur 931 de l'unité électronique 900 vers la première antenne 300a et/ou de propager une onde électromagnétique reçue par la première antenne 300a vers le récepteur 932 de l'unité électronique 900.

Le système radar 200 comprend également une deuxième antenne directive 300b disposée derrière une deuxième pièce de carrosserie 100b avec une deuxième direction prédéterminée correspondant à un deuxième cône C300b d'émission et/ou de réception autour d'un deuxième axe central D300b (cf.fig.2). La deuxième antenne 300b comprend une deuxième cavité 400b réfléchissante aux ondes électromagnétiques dans laquelle est positionnée une deuxième métasurface 500b.

Une électronique de contrôle 550b est par exemple associée à la métasurface 500b et connectée à l'unité électronique 900. Cette électronique de contrôle 550b permet par exemple d'intégrer le registre à décalage nécessaire au pilotage de la surface pilotée de la métasurface 500b, ou selon un autre exemple, de spécialiser l'antenne directive 300b.

Les éléments constitutifs de la deuxième antenne 300b peuvent être similaires aux éléments constitutifs de la première antenne 300a. Les deux antennes 300a et 300b peuvent être identiques ce qui permet de standardiser la production et ainsi réduire les coûts.

Cependant, la deuxième antenne 300b peut aussi avoir des dimensions différentes de la première antenne 300a De plus, les orientations de la première 300a et de la deuxième 300b antennes peuvent être différentes de sorte que la première et la deuxième direction prédéterminée peuvent être différentes.

La deuxième antenne 300b est reliée à l'unité électronique 900 via un deuxième guide d'onde 700b. Le deuxième guide d'onde 700b permet de propager une onde électromagnétique émise par l'émetteur 931 de l'unité électronique 900 vers la deuxième antenne 300b et/ou de propager une onde électromagnétique reçue par la deuxième antenne 300b vers le récepteur 932 de l'unité électronique 900.

Comme représenté sur la figure 2, les antennes 300a et 300b peuvent avoir une forme allongée correspondant à la forme de la métasurface 500a, 500b et le cône C300a, C300b d'émission et/ou de réception associé à l'antenne a par exemple une section de forme oblongue dont le grand axe correspond à l'axe longitudinal de l'antenne 300a, 300b et est proportionnel à la grande dimension de la métasurface 500a, 500b. L'angle d'émission et/ou de réception est par exemple compris entre 80 et 110°notamment 90° (+/-45° par rapport à l'axe centrale D300a, D300b) selon le grand axe de la forme oblongue et de 20° (+/-10° par rapport à l'axe centrale D300a, D300b) selon le petit axe de la forme oblongue.

La disposition des deux antennes 300a, 300b sur deux pièces de carrosserie 100a, 100b différentes permet de pouvoir augmenter le champ de détection en plaçant les antennes 300a, 300b sur des pièces de carrosserie 100a, 100b ayant des formes et des courbures différentes, ce qui permet de placer et surtout orienter les antennes de façon plus favorable. De plus, cela permet de multiplier les emplacements possibles pour les antennes 300a, 300b et ainsi trouver plus facilement un emplacement disponible pour les antennes 300a, 300b compte tenu de l'ensemble des contraintes (place disponible, orientation recherchée, interactions avec les autres équipements, emplacement et longueur des guides d'onde, etc.).

La première 100a et la deuxième 100b pièces de carrosserie peuvent être des pièces de carrosserie adjacentes ce qui permet de réduire la distance entre les antennes 300a, 300b et ainsi de limiter la longueur des guides d'onde 700a, 700b. Une longueur réduite des guides d'onde 700a, 700b permet de limiter les pertes ou atténuations lors de la propagation de l'onde électromagnétique dans les guides d'onde 700a, 700b.

La première 100a et la deuxième 100b pièces de carrosserie peuvent également être des pièces de carrosserie distantes et/ou ayant des orientations différentes, par exemple d'un côté et de l'autre du véhicule 1 ou sur une partie haute et une partie basse du véhicule 1 ce qui permet d'élargir le champ de détection et de combiner au sein d'un même système radar 200 des informations de détection provenant de directions opposées.

Au moins une des antennes 300a, 300b peut être montée sur une pièce de carrosserie montée mobile par rapport au véhicule telle qu'une portière, une porte de coffre ou un hayon. La mobilité de la pièce de carrosserie peut être utilisée pour des détections supplémentaires lors du mouvement de cette/ces pièce(s).

Dans le cas où la première antenne 300a est émettrice et la deuxième antenne 300b est réceptrice, afin de maximiser la portée de détection, l'écart angulaire entre le premier axe central D300a et le deuxième axe central D300b (mesuré dans le plan défini par les directions D300a et D300b) est de préférence choisi inférieur ou égal à 30°.

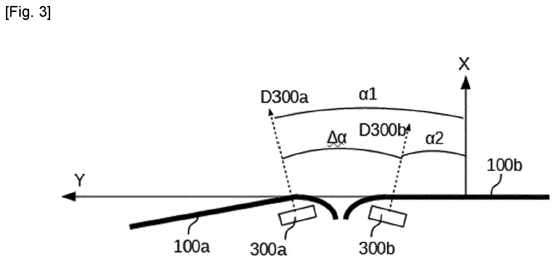

Dans le cas d'une implantation dans un véhicule à moteur 1 tel qu'un véhicule automobile et notamment sur une pièce de carrosserie frontale 100a, 100b tel qu'un pare-chocs avant ou une calandre comme représenté en projection sur la vue de dessus de la figure 3, l'écart angulaire Δα entre l'angle d'azimut α1 du premier axe central D300a et l'angle d'azimut α2 du deuxième axe central D300b est, de préférence, inférieur ou égal à 30°, par exemple égal à 30° de manière à optimiser la détection.

Pour une détection latérale pour laquelle la portée est moins importante, un écart d'angle azimutal Δα entre le premier axe central D300a et le deuxième axe central D300b supérieur à 30°, par exemple 40°, peut être utilisé.

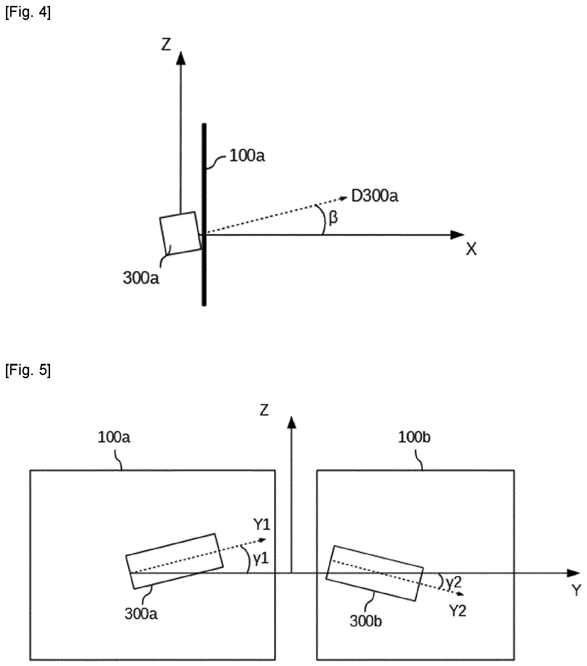

Afin de limiter les détections non pertinentes, par exemple la détection d'un pont ou d'un trottoir dans le cas d'un véhicule automobile, comme représenté en projection sur la figure 4, l'angle d'élévation β entre le premier ou le deuxième axe central D300a, D300b et la direction horizontale (plan XY) est inférieur à 10° (+/-5° par rapport à la direction horizontale), de préférence inférieur à 5° (+/-2,5° par rapport à la direction horizontale.

De plus, toujours pour limiter les détections non pertinentes, comme représenté sur la vue en projection de face de la figure 5, l'angle d'assiette γ1 ou γ2 entre la direction longitudinale de l'antenne Y1 ou Y2 (correspondant au grand axe de la section du cône d'émission ou de réception associé à l'antenne) avec la direction horizontale est, de préférence, inférieur à 30°, notamment inférieur à 5°. Les angles d'assiette des antennes 300a, 300b seront choisis sensiblement égaux pour maximiser la portée de détection.

Les antennes 300a, 300b sont de préférence placées derrière une zone uniforme de la pièce de carrosserie 100a, 100b, c'est-à-dire ayant une composition uniforme et une épaisseur constante, de manière à limiter les réflexions parasites de l'onde électromagnétique. Pour cette raison, on évitera si possible de placer l'antenne à cheval entre deux pièces de carrosserie 100a, 100b.

La première antenne 300a peut être une antenne émettrice utilisée seulement pour l'émission d'une onde électromagnétique et la deuxième antenne 300b peut être une antenne réceptrice utilisée seulement pour la réception d'une onde électromagnétique. Dans ce cas, l'émission et la réception peuvent être continues ce qui permet d'obtenir une détection continue. L'antenne réceptrice 300b est alors configurée pour détecter l'onde électromagnétique émise par l'antenne émettrice 300a et réfléchie par un obstacle situé dans le cône d'émission C300a de l'antenne émettrice 300a vers le cône de réception C300b de l'antenne réceptrice 300b.

Dans ce cas, la différence d'angle d'assiette entre la direction longitudinale Y1 de la première antenne 300a et la direction longitudinale Y2 de la deuxième antenne 300b est de préférence inférieur à 30°, notamment inférieur à 10°, par exemple 0°, de manière à limiter les pertes entre l'émission et la réception et ainsi maximiser la portée de détection.

Les antennes 300a, 300b et notamment les métasurfaces 500a, 500b sont, de préférence, placées au plus près de la surface interne de la pièce de carrosserie 100 afin de limiter les potentielles réflexions parasites.

L'utilisation d'une première 300a et d'une deuxième 300b antennes d'un même système radar 200 ayant des orientations différentes permet également d'augmenter le champ de détection par rapport à l'utilisation d'une antenne unique.

Par ailleurs, la configuration du système radar 200 permet de positionner les antennes 300a, 300b au plus près des surfaces internes des pièces de carrosserie 100a, 100b de manière à limiter les pertes ou les risque de réflexion sur la pièce de carrosserie 100a, 100b tandis que l'unité électronique 900 peut être disposée plus en retrait par rapport aux pièces de carrosserie 100a, 100b de manière à la protéger d'un éventuel choc sur la ou les pièce(s) de carrosserie 100a, 100b. Le fait de disposer les antennes 300a, 300b, 300b' sur deux pièces de carrosserie distinctes 100a et 100b permet également en cas de dégradation de l'une des pièces de carrosserie, par exemple la pièce 100a, de pouvoir continuer à utiliser l'antenne 300b disposée sur l'autre pièce de carrosserie 300b pour continuer la détection. L'antenne 300b peut alors être utilisée en émission et en réception dans un mode de détection dégradé. De plus, il n'est alors nécessaire que de changer l'une des pièces de carrosserie 100a, 100b et donc une antenne 300a au lieu de devoir changer l'ensemble du système radar 200 ce qui réduit le coût des réparations.

La distance entre l'unité électronique 900 et les antennes 300a, 300b peut être limitée, par exemple inférieure à 500mm de manière à limiter les pertes ou atténuations lors de la propagation de l'onde électromagnétique dans les guides d'onde 700a, 700b. Pour cela, les deux pièces de carrosserie 100a et 100b pourront être choisies adjacentes.

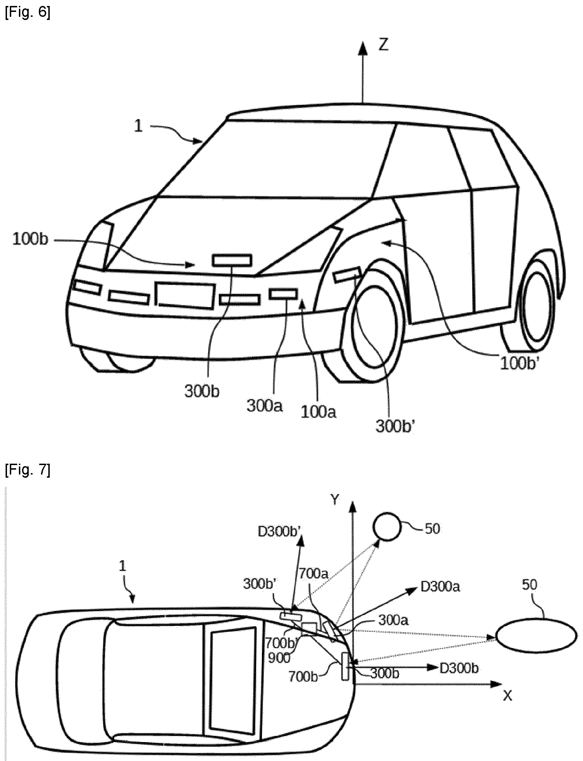

Selon un mode de réalisation particulier représenté sur les figures 6 et 7, le système radar 200 comprend une antenne émettrice 300a disposée sur une première pièce de carrosserie 100a, ici la peau du pare-chocs avant, une première antenne réceptrice 300b disposée sur une deuxième pièce de carrosserie 100b, ici le plastron du pare-chocs avant, et une deuxième antenne réceptrice 300b' disposée sur une troisième pièce de carrosserie 100b', ici l'aile avant gauche d'un véhicule à moteur 1. Les antennes 300a, 300b, 300b' sont par exemple fixées à l'arrière des pièces formant la face avant du véhicule 1, respectivement de la peau de pare-chocs 100a, du plastron de pare-chocs 100b et de l'aile 100b'. L'unité électronique 900 est par exemple disposée plus en retrait par rapport aux pièces de carrosserie 100a, 100b et 100b' de manière à être protégée en cas de choc. Les antennes 300a, 300b et 300b' sont disposées dans des zones différentes du véhicule 1, les différentes zones étant décalées les unes des autres selon la largeur du véhicule 1, c'est-à-dire selon l'axe Y, et l'antenne émettrice 300a est disposée dans une zone centrale par rapport aux zones associées aux antennes réceptrices 300b et 300b' ce qui permet d'obtenir un champ de détection important pour le système radar 200.

Concernant la position en hauteur des antennes 300a, 300b et 300b' au niveau des pièces de carrosserie 100a, 100b, et 100b', notamment pour les antennes disposées sur la partie frontale du véhicule 1 comme les antennes 300a et 300b, elles sont de préférence positionnées au-dessus d'un plan horizontal passant par le point le plus haut de la poutre de chocs et de son absorbeur ou en dessous d'un plan horizontal passant par le point le plus bas de la poutre de chocs et de son absorbeur.

L'axe central D300b du cône de réception de la première antenne réceptrice 300b est orienté en azimut dans une direction correspondant sensiblement à la direction X d'avancement du véhicule 1, l'écart angulaire en azimut est par exemple inférieur à 5°, notamment égal à 0° de manière à pouvoir réaliser une détection frontale des obstacles 50 situés devant le véhicule 1 comme représenté sur la figure 7. L'angle d'élévation de l'axe central D300b est sensiblement confondu avec la direction horizontale, l'écart angulaire entre l'axe central D300b et la direction horizontale (plan XY) est notamment inférieur à 5°. L'antenne émettrice 300a peut avoir sensiblement la même orientation que la première antenne réceptrice 300b ou peut être décalée angulairement en azimut du côté de la deuxième antenne réceptrice 300b'. L'écart angulaire en azimut entre l'axe central D300a du cône d'émission de l'antenne émettrice 300a et l'axe central D300b du cône de réception de la première antenne réceptrice 300b est par exemple inférieur à 30°, par exemple 20° de manière à maximiser la portée de détection dans la direction frontale du véhicule 1. L'angle d'élévation de l'axe central D300a du cône d'émission de l'antenne émettrice 300a est sensiblement confondu avec la direction horizontale, l'angle entre l'axe central D300a et la direction horizontale est notamment inférieur à 5°, par exemple égal à 0°. La deuxième antenne réceptrice 300b' a une orientation azimutale différente de la première antenne réceptrice 300b pour élargir le champ de détection et permettre une détection des obstacles 50 situés sur le côté du véhicule 1. L'écart angulaire en azimut entre l'axe central D300a du cône d'émission de l'antenne émettrice 300a et l'axe central du cône de réception D300b' de la deuxième antenne réceptrice 300b est par exemple supérieur à 30°, par exemple 40°. L'angle d'élévation de l'axe central D300b' du cône de réception de la deuxième antenne réceptrice 300b' est sensiblement confondu avec la direction horizontale, notamment inférieur à 5°, par exemple égal à 0°.

Dans l'exemple des figures 6 et 7, la première antenne réceptrice 300b a une longueur supérieure à l'antenne émettrice 300a et à la deuxième antenne réceptrice 300b' (qui peuvent, elles, avoir la même longueur). Une longueur d'antenne supérieure correspond à une métasurface 500a, 500b de plus grande dimension permettant d'obtenir une ouverture plus importante et donc une résolution spatiale améliorée permettant de discriminer deux éléments distincts situés à une distance importante, par exemple 100m. La première antenne réceptrice 300b de dimension supérieure permet ainsi d'accroître la résolution spatiale dans la direction frontale correspondant à la direction X d'avancement du véhicule 1. Le cône de réception de la deuxième antenne réceptrice 300b' peut comprendre une zone de recouvrement avec le cône de réception de la première antenne réceptrice 300b. Un tel recouvrement peut notamment permettre de détecter un dysfonctionnement de l'une des antennes réceptrices 300b, 300b'.

De plus, un tel recouvrement permet de réaliser un suivi d'un obstacle se déplaçant dans le champ de détection couvert par l'ensemble du système radar 200 comprenant l'antenne émettrice 300a et les deux antennes réceptrices 300b et 300b'. Ce suivi est notamment possible du fait d'une unité électronique 900 commune à laquelle sont reliées les différentes antennes 300a, 300b, 300b'. L'utilisation d'une unité électronique commune permet également de limiter les latences liées à la détection des obstacles notamment lors d'un suivi d'un obstacle se déplaçant dans le champ de détection couvert par les différentes antennes 300a, 300b, 300b'.

Ainsi, en fonctionnement, l'antenne émettrice 300a émet une onde électromagnétique dans son cône d'émission. Cette onde électromagnétique est réfléchie par des obstacles 50, tels que d'autres véhicules ou des piétons ou des éléments urbains fixes, et renvoyée vers le cône de réception de la première antenne réceptrice 300b pour les obstacles 50 situés devant le véhicule 1 et vers le cône de réception de la deuxième antenne réceptrice 300b' pour les obstacles 50 situés sur le côté gauche du véhicule 1 comme représenté par les flèches en pointillés sur la figure 7.

D'autre part, les antennes 300a, 300b, 300b' peuvent être reconfigurées de sorte qu'une antenne émettrice 300a peut être reconfigurée pour permettre une réception de l'onde électromagnétique et inversement, une antenne réceptrice 300b, 300b' peut être reconfigurée pour émettre une onde électromagnétique. Ainsi, par exemple, en cas de dysfonctionnement de l'antenne émettrice 300a, la première antenne réceptrice 300b peut être reconfigurée en antenne émettrice afin de permettre de préserver une fonction de détection en association avec la deuxième réceptrice 300b'. Cependant, la détection est alors dégradée, la portée et/ou le champ de détection sont par exemple réduits par rapport à la configuration initiale.

Le système radar 200 peut également comprendre un nombre d'antennes réceptrices plus important, par exemple pour permettre une détection du côté droit du véhicule 1. Le système radar 200 peut également comprendre plusieurs antennes émettrices. Les antennes 300a, 300b, 300b' présentés sur les figures 6 et 7 seulement du côté gauche du véhicule peuvent être dupliquées, de préférence de façon symétrique, du côté droit du véhicule et les six antennes (deux antennes émettrices et quatre antennes réceptrices) peuvent être reliées à une unité électronique 900 commune permettant ainsi un champ de détection couvrant une zone angulaire d'au moins 180°, voire 200° autour du pare-chocs avant. De plus, le système radar 200 peut comprendre une pluralité d'unités électroniques 900 et les antennes 300a, 300b, 300b' peuvent être reliées à différentes unités électroniques 900. Dans les différents modes de réalisations décrits, l'unité électronique 900 comprend un unique émetteur 931 et un unique récepteur 932.

Alternativement, les antennes 300a et 300b peuvent être utilisées en émission et en réception. Dans ce cas, l'émission et la réception se font de manière alternée pour chacune des antennes. Dans ce cas, l'orientation des antennes est choisie en fonction du champ de détection recherché. De plus, une antenne peut être utilisée en mode émission et réception en cas de panne d'une autre antenne pour préserver la capacité de détection du système radar 200.

La présente invention concerne également un ensemble comprenant au moins une première pièce de carrosserie 100a et une deuxième pièce de carrosserie 100b et un système radar 200 tel que décrit précédemment.

La présente invention concerne également un véhicule à moteur 1, notamment un véhicule automobile, comprenant une première pièce de carrosserie 100a, une deuxième pièce de carrosserie 100b et un système radar 200 tel que décrit précédemment. Les pièces de carrosserie 100a, 100b comprennent une paroi en matière plastique derrière et sur laquelle une ou plusieurs antennes 300a, 300b sont positionnées et fixées. De préférence, la paroi en matière plastique est homogène afin de ne pas perturber la transmission de l'onde électromagnétique. Par homogène, on entend ici que l'épaisseur est sensiblement constante, que le même matériau ou les mêmes couches de matériaux sont utilisées et que la paroi est pleine (sans ajours comme pour une grille d'entrée d'air). De préférence également, la courbure de la paroi en plastique en regard de l'antenne 300a, 300b est réduite, le rayon de courbure est par exemple supérieur à 500mm de manière à limiter les espaces pouvant apparaître entre l'antenne qui peut être plane et la pièce de carrosserie incurvée. Les pièces de carrosserie 100a, 100b peuvent être constituées de plusieurs composants en matière plastique et comprendre plusieurs antennes, les antennes pouvant être réparties sur les différents composants des différentes pièces de carrosserie.

L'unité électronique 900 peut également être fixée sur l'une des pièces de carrosserie 100a, 100b mais pas nécessairement contre la paroi en matière plastique.

Les pièces de carrosserie 100a, 100b peuvent être choisies parmi un pare-chocs avant, un pare-chocs arrière, une aile, une portière latérale, un hayon, un pied milieu/avant/arrière, une arche latérale, une traverse avant/arrière de toit, ou tout autre pièce de carrosserie comprenant une paroi en matière plastique permettant une propagation de l'onde électromagnétique émise par le système radar 200.

Le véhicule 1 peut également comprendre différents systèmes radars 200 dont les antennes 300a, 300b, 300b' sont réparties sur différentes pièces de carrosserie 100a, 100b, 100b' du véhicule 1 pour permettre une détection d'obstacles 50 autour de l'ensemble du véhicule 1.

### Liste des références

- 1 :: véhicule
- 50 :: obstacle
- 100a, 100b :: pièces de carrosserie
- 200 :: système radar
- 300a, 300b, 300b' :: antennes directives
- 400a, 400b :: cavités réfléchissantes
- 500a, 500b :: métasurfaces
- 550a, 550b :: électronique de contrôle de la métasurface associée
- 700a, 700b :: guides d'onde
- 900 :: unité électronique
- 931 :: émetteur primaire
- 932 :: récepteur primaire
- 940 :: électronique de contrôle des émetteurs 931 et récepteurs 932 primaires

## Revendications

1. Système radar (200) pour véhicule à moteur (1) comprenant :
- une unité électronique (900) configurée pour émettre et recevoir une onde électromagnétique dans une plage de fréquence prédéterminée,
- une première antenne directive (300a) disposée sur une première pièce de carrosserie (100a) du véhicule (1) et comprenant une première cavité réfléchissante (400a) aux ondes électromagnétiques dans laquelle est positionnée une première métasurface (500a) **caractérisée en ce que** ladite première antenne (300a) étant configurée pour être reliée à l'unité électronique (900) via un premier guide d'onde (700a) et pour émettre une onde électromagnétique émise par l'unité électronique (900) et propagée via le premier guide d'onde (700a) dans une première direction prédéterminée et/ou pour propager une onde électromagnétique reçue depuis la première direction prédéterminée vers l'unité électronique (900) via le premier guide d'onde (700a),
- une deuxième antenne directive (300b) disposée sur une deuxième pièce de carrosserie (100b) comprenant une deuxième cavité réfléchissante (400b) aux ondes électromagnétiques dans laquelle est positionnée une deuxième métasurface (500b), ladite deuxième antenne (300b) étant configurée pour être reliée à l'unité électronique (900) via un deuxième guide d'onde (700b) et pour transmettre une onde électromagnétique émise par l'unité électronique (900) et propagée via le deuxième guide d'onde (700b) dans une deuxième direction prédéterminée et/ou pour propager une onde électromagnétique reçue depuis la deuxième direction prédéterminée vers l'unité électronique (900) via le deuxième guide d'onde (700b),
dans lequel la première antenne (300a) dite antenne émettrice est configurée pour émettre une onde électromagnétique émise par l'unité électronique (900) et propagée via le premier guide d'onde (700a) dans la première direction prédéterminée et la deuxième antenne (300b) dite antenne réceptrice est configurée pour recevoir l'onde électromagnétique émise par l'antenne émettrice (300a) et réfléchie par un obstacle (50) et pour propager l'onde électromagnétique reçue vers l'unité électronique (900) via le deuxième guide d'onde (700b).

2. Système radar (200) selon la revendication 1 dans lequel la première antenne (300a) est configurée pour être disposée derrière une paroi en matière plastique de la première pièce de carrosserie (100a) et la deuxième antenne (300b) est configurée pour être disposée derrière une paroi en matière plastique de la deuxième pièce de carrosserie (100b).

3. Système radar (200) selon la revendication précédente dans lequel les antennes (300a, 300b) sont configurées pour être disposées en regard d'une paroi en matière plastique uniforme.

4. Système radar (200) selon la revendication 2 ou 3 dans lequel les antennes (300a, 300b) sont configurées pour être disposées en regard d'une paroi en matière plastique dont le rayon de courbure est supérieur à 500mm.

5. Système radar (200) selon l'une des revendications précédentes dans lequel la première pièce de carrosserie (100a) et la deuxième pièce de carrosserie (100b) sont des pièces de carrosserie adjacentes.

6. Système radar (200) selon l'une des revendications 1 à 4 dans lequel la première pièce de carrosserie (100a) est disposée d'un premier côté du véhicule (1) et la deuxième pièce de carrosserie (100b) est disposée d'un deuxième côté du véhicule (1) opposé au premier côté.

7. Système radar (200) selon l'une des revendications précédentes dans lequel la première (100a) et/ou la deuxième (100b) pièce de carrosserie est une pièce de carrosserie montée mobile sur le véhicule (1).

8. Système radar (200) selon l'une des revendications précédentes dans lequel la plage de fréquence prédéterminée est supérieure à 60GHz, notamment entre 75 et 80GHz, notamment 77GHz.

9. Système radar (200) selon l'une des revendications précédentes dans lequel l'unité électronique (900) est configurée pour être positionné à distance des pièces de carrosserie (100a, 100b).

10. Ensemble comprenant au moins une première et une deuxième pièces de carrosserie (100a, 100b), l'ensemble comprenant un système radar (200) selon l'une des revendications précédentes.

11. Véhicule à moteur (1) comprenant une première pièce de carrosserie (100a), une deuxième pièce de carrosserie (100b) et un système radar (200) selon l'une des revendications précédentes.

## Patentansprüche

1. Radarsystem (200) für Fahrzeug (1) mit Antriebsmotor, umfassend:
- eine elektronische Einheit (900), die ausgebildet ist, um eine elektromagnetische Welle in einem vorher festgelegten Frequenzbereich zu senden und zu empfangen,
- eine erste Richtantenne (300a), die auf einem ersten Karosserieteil (100a) des Fahrzeugs (1) angeordnet ist und eine die elektromagnetischen Wellen reflektierende erste Kavität (400a) umfasst, in der eine erste Metaoberfläche (500a) positioniert ist, **dadurch gekennzeichnet, dass** die erste Antenne (300a) ausgebildet ist, um mit der elektronischen Einheit (900) über einen ersten Wellenleiter (700a) verbunden zu werden und um eine von der elektronischen Einheit (900) gesendete und über den ersten Wellenleiter (700a) verbreitete elektromagnetische Welle in einer ersten vorher festgelegten Richtung zu senden und/oder um eine aus der ersten vorher festgelegten Richtung empfangene elektromagnetische Welle über den ersten Wellenleiter (700a) zu der elektronischen Einheit (900) hin zu verbreiten,
- eine zweite Richtantenne (300b), die auf einem zweiten Karosserieteil (100b) angeordnet ist und eine die elektromagnetischen Wellen reflektierende zweite Kavität (400b) umfasst, die d in der eine zweite Metaoberfläche (500b) positioniert ist, wobei die zweite Antenne (300b) ausgebildet ist, um mit der elektronischen Einheit (900) über einen zweiten Wellenleiter (700b) verbunden zu werden und um eine von der elektronischen Einheit (900) gesendete und über den zweiten Wellenleiter (700b) verbreitete elektromagnetische Welle in einer zweite vorher festgelegten Richtung zu übertragen und/oder um eine aus der zweiten vorher festgelegten Richtung empfangene elektromagnetische Welle über den ersten zweiten Wellenleiter (700b) zu der elektronischen Einheit (900) hin zu verbreiten,
wobei die erste Antenne (300a), so genannte Sendeantenne, ausgebildet ist, um eine von der elektronischen Einheit (900) gesendete und über den ersten Wellenleiter (700a) verbreitete elektromagnetische Welle in der ersten vorher festgelegten Richtung zu senden, und die zweite Antenne (300b), so genannte Empfangsantenne, ausgebildet ist, um die von der Sendeantenne (300a) gesendete und von einem Hindernis (50) reflektierte elektromagnetische Welle zu empfangen und um die empfangene elektromagnetische Welle über den zweiten Wellenleiter (700b) zu der elektronischen Einheit (900) hin zu verbreiten.

2. Radarsystem (200) nach Anspruch 1, wobei die erste Antenne (300a) ausgebildet ist, um hinter einer Wand aus Kunststoff des ersten Karosserieteils (100a) angeordnet zu werden, und die zweite Antenne (300b) ausgebildet ist, um hinter einer Wand aus Kunststoff des zweiten Karosserieteils (100b) angeordnet zu werden.

3. Radarsystem (200) nach dem vorhergehenden Anspruch, wobei die Antennen (300a, 300b) ausgebildet sind, um einer gleichartigen Wand aus Kunststoff gegenüber angeordnet zu werden.

4. Radarsystem (200) nach Anspruch 2 oder 3, wobei die Antennen (300a, 300b) ausgebildet sind, um einer Wand aus Kunststoff gegenüber angeordnet zu werden, deren Biegeradius größer als 500 mm ist.

5. Radarsystem (200) nach einem der vorhergehenden Ansprüche, wobei das erste Karosserieteil (100a) und das zweite Karosserieteil (100b) benachbarte Karosserieteile sind.

6. Radarsystem (200) nach einem der Ansprüche 1 bis 4, wobei das erste Karosserieteil (100a) auf einer ersten Seite des Fahrzeugs (1) angeordnet ist und das zweite Karosserieteil (100b) auf einer zweiten Seite des Fahrzeugs (1) angeordnet ist, die der ersten Seite gegenüberliegt.

7. Radarsystem (200) nach einem der vorhergehenden Ansprüche, wobei das erste Karosserieteil (100a) und/oder das zweite Karosserieteil (100b) ein Karosserieteil ist, das an dem Fahrzeug (1) beweglich gelagert ist.

8. Radarsystem (200) nach einem der vorhergehenden Ansprüche, wobei der vorher festgelegte Frequenzbereich größer als 60 Ghz ist, insbesondere zwischen 75 und 80 Ghz beträgt, insbesondere 77 Ghz beträgt.

9. Radarsystem (200) nach einem der vorhergehenden Ansprüche, wobei die elektronische Einheit (900) ausgebildet ist, um von den Karosserieteilen (100a, 100b) beabstandet angeordnet zu werden.

10. Anordnung, umfassend mindestens ein erstes und ein zweites Karosserieteil (100a, 100b), wobei die Anordnung ein Radarsystem (200) nach einem der vorhergehenden Ansprüche umfasst.

11. Fahrzeug (1) mit Antriebsmotor, umfassend ein erstes Karosserieteil (100a) und ein zweites Karosserieteil (100b) und ein Radarsystem (200) nach einem der vorhergehenden Ansprüche.

## Claims

1. A radar system (200) for a motor vehicle (1), comprising:
- an electronic unit (900) configured to transmit and receive an electromagnetic wave within a predetermined frequency range,
- a first directional antenna (300a) mounted on a first body panel (100a) of the vehicle (1) and comprising a first reflective cavity (400a) for electromagnetic waves, within which a first metasurface (500a) is positioned, **characterised in that** said first antenna (300a) is configured to be connected to the electronic unit (900) via a first waveguide (700a) and to transmit an electromagnetic wave emitted by the electronic unit (900) and propagated via the first waveguide (700a) in a first predetermined direction and/or to propagate an electromagnetic wave received from the first predetermined direction towards the electronic unit (900) via the first waveguide (700a),
- a second directional antenna (300b) arranged on a second body panel (100b) comprising a second cavity (400b) that reflects electromagnetic waves, within which a second metasurface (500b) is positioned, said second antenna (300b) being configured to be connected to the electronic unit (900) via a second waveguide (700b) and to transmit an electromagnetic wave emitted by the electronic unit (900) and propagated via the second waveguide (700b) in a second predetermined direction and/or to propagate an electromagnetic wave received from the second predetermined direction towards the electronic unit (900) via the second waveguide (700b)
wherein the first antenna (300a), referred to as the transmitting antenna, is configured to transmit an electromagnetic wave emitted by the electronic unit (900) and propagated via the first waveguide (700a) in the first predetermined direction, and the second antenna (300b), referred to as the receiving antenna, is configured to receive the electromagnetic wave emitted by the transmitting antenna (300a) and reflected by an obstacle (50), and to propagate the received electromagnetic wave towards the electronic unit (900) via the second waveguide (700b).

2. A radar system (200) according to claim 1, wherein the first antenna (300a) is configured to be arranged behind a plastic wall of the first body panel (100a) and the second antenna (300b) is configured to be arranged behind a plastic wall of the second body panel (100b).

3. A radar system (200) according to the preceding claim, in which the antennas (300a, 300b) are configured to be arranged opposite a uniform plastic wall.

4. A radar system (200) according to claim 2 or 3, wherein the antennas (300a, 300b) are configured to be arranged opposite a plastic wall having a radius of curvature greater than 500 mm.

5. A radar system (200) according to one of the preceding claims, in which the first body panel (100a) and the second body panel (100b) are adjacent body panels.

6. A radar system (200) according to any one of claims 1 to 4, wherein the first body panel (100a) is arranged on a first side of the vehicle (1) and the second body panel (100b) is arranged on a second side of the vehicle (1) opposite the first side.

7. A radar system (200) according to one of the preceding claims, in which the first (100a) and/or the second (100b) body panel is a body panel mounted movably on the vehicle (1).

8. A radar system (200) according to one of the preceding claims, in which the predetermined frequency range is greater than 60 GHz, in particular between 75 and 80 GHz, in particular 77 GHz.

9. A radar system (200) according to one of the preceding claims, in which the electronic unit (900) is configured to be positioned at a distance from the body parts (100a, 100b).

10. An assembly comprising at least a first and a second body panel (100a, 100b), the assembly comprising a radar system (200) according to one of the preceding claims.

11. A motor vehicle (1) comprising a first body panel (100a), a second body panel (100b) and a radar system (200) according to one of the preceding claims.
